Europäisches Patentamt

European Patent Office

Office européen des brevets

(19)

(11) Numéro de publication : **0 101 389**
**B1**

(12) # FASCICULE DE BREVET EUROPÉEN

(45) Date de publication du fascicule du brevet :
**10.09.86**

(21) Numéro de dépôt : **83420107.1**

(22) Date de dépôt : **29.06.83**

(51) Int. Cl.⁴ : **H 01 F 7/18, G 05 D 19/02,
B 25 D 13/00, H 02 K 33/00**

(54) Procédé et dispositif pour la commande auto-synchronisée d'un marteau électro-magnétique.

(30) Priorité : **03.08.82 FR 8213950**

(43) Date de publication de la demande :
**22.02.84 Bulletin 84/08**

(45) Mention de la délivrance du brevet :
**10.09.86 Bulletin 86/37**

(84) Etats contractants désignés :
**AT BE CH DE GB IT LI NL SE**

(56) Documents cités :
**FR-A- 2 197 418**
**FR-A- 2 425 302**
**FR-A- 2 430 827**
**US-A- 3 118 383**

(73) Titulaire : **MARTELEC**
**9 chemin du Vallon**
**F-69300 Caluire Rhône (FR)**

(72) Inventeur : **Jacquemet, Georges**
**9 chemin du Vallon**
**Caluire Rhône (FR)**

(74) Mandataire : **Maureau, Bernard**
**Cabinet GERMAIN & MAUREAU Le Britannia - Tour C**
**20, Boulevard Eugène Déruelle**
**F-69003 Lyon (FR)**

## Description

La présente invention se rapporte à un procédé pour la commande auto-synchronisée du fonctionnement d'un marteau électro-magnétique, ainsi qu'à un dispositif destiné à la mise en œuvre de ce procédé. Cette invention concerne, plus particulièrement, les marteaux électro-magnétiques comprenant un électro-aimant dont le bobinage est apte à attirer un noyau plongeur constituant une masse mobile déplaçable suivant l'axe du bobinage, avec, pour accumuler l'énergie électrique et la restituer brutalement dans le bobinage de l'électro-aimant, des condensateurs dont la charge au travers d'une inductance est contrôlée par un premier thyristor et dont la décharge, créant une impulsion de courant électrique de courte durée dans le bobinage de l'électro-aimant, provoquant l'attraction du noyau plongeur et le choc de l'outil de percussion, est contrôlée par un second thyristor, les électrodes de commande des thyristors de charge et de décharge étant reliées à des circuits de commande électroniques délivrant alternativement des impulsions sur chacune d'elles. Ce genre d'appareil est décrit dans le brevet français N° 2 356 483.

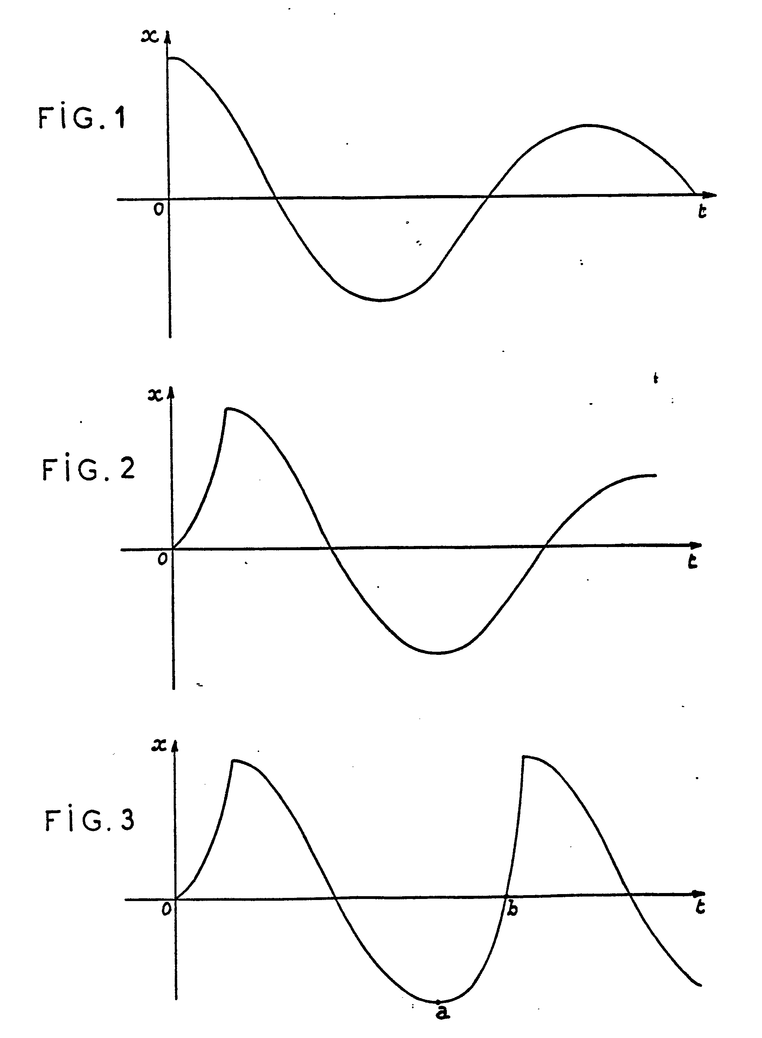

La masse mobile constituée par le noyau plongeur de l'électro-aimant peut être suspendue élastiquement, comme décrit dans le brevet français N° 2 430 827, auquel cas elle constitue avec son dispositif de suspension (ressort) un système oscillant amorti, ayant une fréquence propre, dont la courbe de déplacement (x) en fonction du temps (t) est représentée sur la figure 1 du dessin schématique annexé, pour un fonctionnement libre.

Si l'on applique une force impulsionnelle à partir de la position de repos, la courbe de déplacement aura la forme indiquée sur la Figure 2. Si les impulsions de force sont appliquées de façon périodique, en phase avec le déplacement de la masse mobile, on aura un mouvement entretenu et la courbe de déplacement prendra la forme illustrée par la Figure 3.

Pour obtenir un mouvement entretenu régulier, la force impulsionnelle, agissant dans une seule direction, devra être appliquée entre les points (a et b) de la courbe de la Figure 3, c'est-à-dire pendant le temps où la force impulsionnelle et la force élastique du système oscillant mécanique ont la même direction.

La force impulsionnelle est ici la force magnétique résultant d'une impulsion de courant électrique parcourant le bobinage de l'électro-aimant qui constitue l'organe moteur du marteau électro-magnétique. Les impulsions électriques devront être fournies en synchronisation avec le mouvement de la masse mobile, pour que la force magnétique agisse dans le même sens que la force élastique, mais également pour mettre en accord les systèmes électrique et magnéto-mécanique, cette mise en accord étant obtenue en déclenchant les impulsions électriques à l'instant où la position du noyau dans le bobinage correspond à la self-induction d'accord.

Cette synchronisation est actuellement réalisée moyennant des réglages difficiles, nécessitant l'utilisation d'instruments d'analyse et de mesure, notamment d'oscilloscopes.

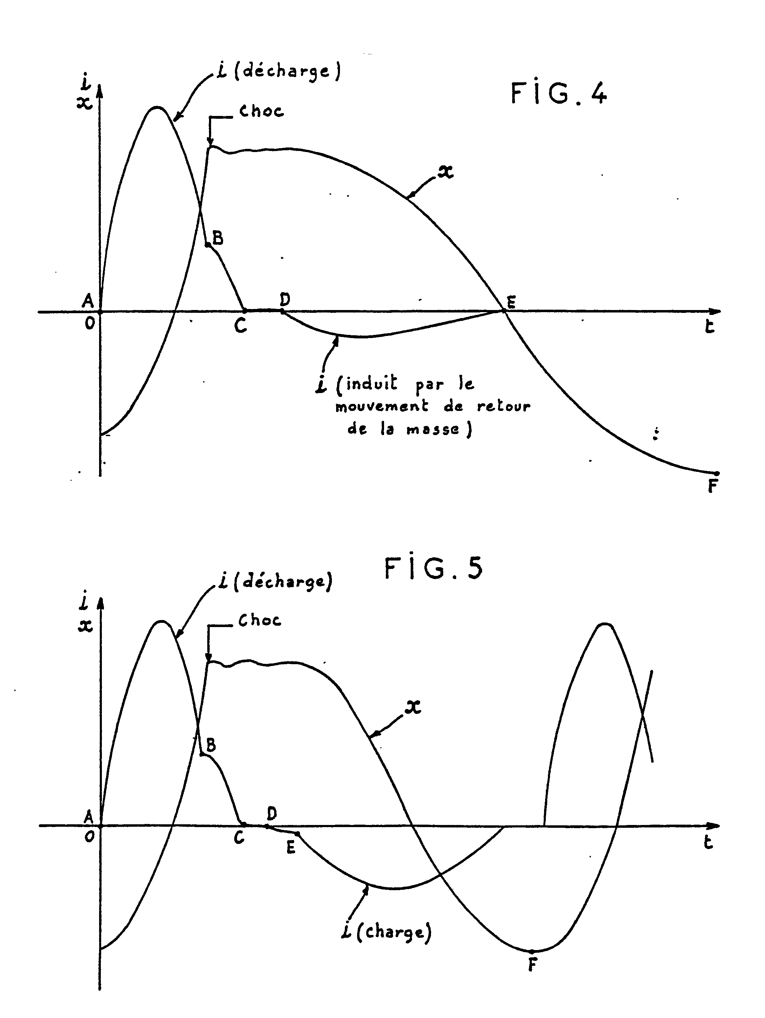

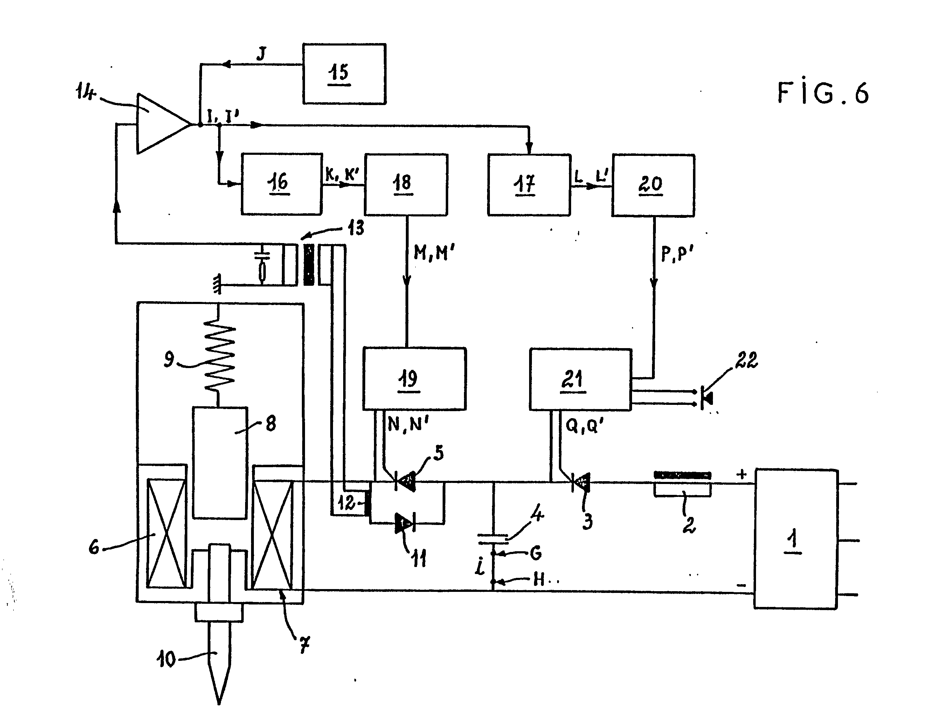

Le problème posé, et non résolu de façon satisfaisante jusqu'à présent, est illustré plus précisément par les figures 4 et 5 qui feront aussi apparaître l'idée de la solution selon la présente invention :

La figure 4 représente deux courbes relevées simultanément en fonction du temps (t), sur un marteau électro-magnétique en fonctionnement ; l'une est la courbe de déplacement (x) du noyau mobile, l'autre la courbe de l'intensité (i) du courant parcourant le bobinage de l'électro-aimant et l'inductance de charge des condensateurs, sur la partie du circuit électrique commune aux fonctions de charge et de décharge des condensateurs.

Le flux de courant électrique produit par la décharge des condensateurs dans le bobinage, crée le champ magnétique, donc la force magnétique impulsionnelle appliquée au noyau mobile.

Sur la figure 4, la partie positive de la courbe d'intensité (i) entre les points (A) et (B), correspond à la décharge électrique et à la course de la masse mobile pendant ce temps, le point (B) correspondant à l'instant du choc. Entre les points (B) et (C), la courbe d'intensité (i) correspond à la force magnétique due à l'hystérésis du circuit magnétique, qui maintient la masse mobile au point de choc avec des rebondissements éventuels. Du point (C) au point (D), le mouvement de la masse mobile est pratiquement nul, de même que l'intensité (i). Entre les points (D) et (E), la force magnétique rémanente n'équilibre plus la force élastique antagoniste et sous l'action de celle-ci le noyau mobile effectue sa course de retour.

Cependant le noyau est encore magnétisé et le mouvement de cette masse magnétique, sous l'action de la force élastique, induit une force électro-motrice dans le bobinage, avec un flux de courant correspondant ; par suite, entre les points (D) et (E), l'intensité (i) devient négative, augmente de valeur puis diminue, suivant une courbe qui s'annule à nouveau au point (E), ce qui correspond au point d'équilibre de la force élastique, c'est-à-dire au point de repos de la masse mobile, que l'on peut appeler « point zéro ». Le début de la course de retour ayant débuté au point (D), à l'instant où l'intensité (i) est passée une première fois à zéro.

La détection des instants où l'intensité parcourant le bobinage devient négative, passant et repassant au zéro d'intensité, permettra de déterminer dans le temps deux positions de la masse mobile dans l'espace. Le premier passage au zéro en (D), déterminera l'instant où la masse mobile débute sa course de retour. Le deuxième passage au zéro en (E), déterminera l'instant où la masse mobile passera dans l'espace, à l'intérieur du bobinage, au point zéro de sa course.

A partir de la connaissance de ces deux instants, on peut déterminer le moment où la masse mobile sous l'action de la force élastique, atteindra le point d'amplitude maxima de sa course retour, désigné par (F) sur la figure 4.

Les caractéristiques du circuit oscillant mécanique sont définies par sa constante élastique et par la valeur de la masse mobile. Ces deux composantes peuvent être mesurées, la durée de la période de l'oscillation mécanique calculée.

Le temps s'écoulant entre le point (D) et le point (F) correspondra à la moitié de la période de l'oscillation mécanique. Le temps s'écoulant entre le point (E) et le point (F) correspondra au quart de la période de l'oscillation mécanique. Ces deux temps peuvent être facilement établis.

La détection du point (E) est valable pour un fonctionnement à fréquence raltivement basse, où la charge des condensateurs est déclenchée après le retour au point zéro de la masse mobile. Lorsque le système fonctionne à une fréquence plus élevée, la charge des condensateurs doit être déclenchée avant le retour au point zéro de la masse mobile. On peut utiliser alors la détection par le point (D), ou bien lorsque les matériaux employés pour le noyau mobile ont un cycle d'hystérésis long qui freine le retour de la masse sous l'action de la force élastique, le principe illustré par la figure 5.

Cette Figure 5 concerne un marteau électromagnétique fonctionnant dans les conditions considérées en dernier lieu, et représente de même que la Figure 4, les courbes de déplacement (x) et d'intensité (i) relevées simultanément en fonction du temps (t).

De même que sur la Figure 4, la courbe d'intensité (i) représente du point (A) au point (B), la décharge électrique, le point (B) correspondant à l'instant du choc ; du point (B) au point (C) la courbe correspond à l'hystérésis du circuit magnétique avec maintien au point de choc de la masse et rebondissements éventuels, du point (C) au point (D) le mouvement de la masse mobile est pratiquement nul, l'intensité également ; du point (D) au point (E) l'intensité devient faiblement négative et correspond à un lent mouvement de retour de la masse mobile.

En (E) est déclenchée la charge des condensateurs à travers l'inductance, ce qui a pour effet secondaire de faire varier brutalement le courant inverse parcourant le bobinage de l'électro-aimant, et de supprimer la force magnétique produite par la rémanence.

A partir de cet instant, la masse mobile est soumise à la seule action de la force élastique du système mécanique, et son déplacement dans le temps et dans l'espace est déterminé par les caractéristiques de ce système oscillant ; la masse accomplira alors sa course de retour et atteindra le point d'amplitude maxima de retour en (F).

Dans ce cas, l'instant du point (E) correspondra au début de la charge des condensateurs, et également au début de la course de retour de la masse mobile. L'instant correspondant au point (E) est déterminé de toute façon par le circuit électronique de commande du thyristor de charge, et ne nécessite donc pas de détection particulière. Le temps s'écoulant entre le point (E) et le point (F), correspondant à l'amplitude maxima de la course de retour, correspondra à la moitié de la période de l'oscillation mécanique.

Des constatations précédentes, se déduit le procédé objet de l'invention pour la commande auto-synchronisée d'un marteau électromagnétique, décrit dans la revendication 1.

Suivant un premier mode de mise en œuvre de ce procédé de commande auto-synchronisée, on détecte directement, le premier passage par la valeur zéro de l'intensité du courant de décharge des condensateurs, parcourant le bobinage de l'électro-aimant, et on déclenche l'impulsion de commande du thyristor de décharge après un temps au moins égal à la demi-période de l'oscillation mécanique de la masse mobile suspendue, ce temps étant mesuré à partir de la détection du premier passage par la valeur zéro de l'intensité. On détecte donc dans ce cas le point (D), et l'on effectue l'auto-synchronisation à partir de ce point, si l'on se réfère à la figure 4.

Suivant un deuxième mode de mise en œuvre, on détecte directement le second passage par la valeur zéro de l'intensité du courant de décharge des condensateurs, parcourant le bobinage de l'électro-aimant, et on déclenche l'impulsion de commande du thyristor de décharge après un temps au moins égal au quart de la période de l'oscillation mécanique de la masse mobile suspendue, ce temps étant mesuré à partir de la détection du second passage par la valeur zéro de l'intensité. On détecte donc dans ce cas le point (E), et l'on effectue l'auto-synchronisation à partir de ce point, si l'on se réfère toujours à la figure 4.

Dans les deux cas, l'auto-synchronisation est réalisée, compte tenu des relations existant entre les passages au zéro de l'intensité et une position connue du noyau mobile à l'intérieur du bobinage.

L'impulsion de commande du thyristor de charge des condensateurs est, selon le cas, déclenchée elle aussi après un temps déterminé mesuré soit à partir de la détection du premier passage par la valeur zéro de l'intensité, soit à partir de la détection du second passage par la valeur zéro de l'intensité.

Ainsi, dans tous les cas, le procédé défini ci-dessus réalise la synchronisation des impulsions électriques avec le déplacement du noyau plongeur dans le bobinage de l'électro-aimant du marteau électromagnétique.

Le dispositif selon l'invention pour la commande auto-synchronisée d'un marteau électromagnétique, mettant en œuvre ce procédé, comprend de façon générale un circuit produisant une impulsion de durée égale à une fraction déterminée de la période de l'oscillation mécanique, un circuit recevant ladite impulsion et commandant, par l'intermédiaire d'un premier circuit interface, le thyristor de décharge des condensateurs, un circuit produisant une autre impulsion de durée déterminée et un circuit recevant cette autre impulsion et commandant, par l'intermédiaire d'un second circuit interface, le thyristor de charge des condensateurs ; le circuit produisant une impulsion de durée égale à une fraction déterminée de la période de l'oscillaton mécanique, pour la commande du thyristor de décharge, de même que le circuit produisant une impulsion de durée déterminée pour la commande du thyristor de charge, étant l'un et l'autre pilotés par un circuit détecteur de passage au zéro, relié à un capteur d'intensité du courant de décharge des condensateurs. Ce capteur peut être constitué, plus particulièrement, par une résistance disposée dans le circuit d'une diode branchée de façon connue en parallèle avec le thyristor de décharge, et reliée par l'intermédiaire d'un transformateur élévateur de tension à l'entrée du circuit détecteur de passage au zéro. On comprend que l'auto-synchronisation est ainsi réalisée en déclenchant l'impulsion de commande du thyristor de décharge à partir du signal fourni par le circuit détecteur de zéro d'intensité, et avec une temporisation fonction des caractéristiques du système oscillant mécanique, résultant du circuit produisant une impulsion de durée égale :

— au moins à la demi-période de l'oscillation de ce système, si l'on détecte et exploite le premier passage au zéro de l'intensité ;

— au moins au quart de la période de l'oscillation de ce système, si l'on détecte et exploite le second passage au zéro de l'intensité.

De toute façon, l'invention sera mieux comprise à l'aide de la description qui suit, en référence au dessin schématique annexé représentant, à titre d'exemples non limitatifs, des formes de réalisation de ce dispositif pour la commande auto-synchronisée d'un marteau électromagnétique ;

Figure 6 est un schéma de principe du marteau-électromagnétique et de ses circuits de commande auto-synchronisée, dans une forme de réalisation ;

Figures 7 et 8 sont des diagrammes illustrant le fonctionnement des circuits de la figure 6, selon deux possibilités.

Comme le montre la figure 6, la partie électrique du marteau électro-magnétique comprend une alimentation (1) fournissant, à partir du secteur, une tension continue qui, par l'intermédiaire d'une inductance (2) et d'un premier thyristor (3), permet la charge de condensateurs (4). Une autre partie du circuit comprenant un deuxième thyristor (5) permet la décharge des condensateurs (4) dans le bobinage (6) d'un électro-aimant (7), dont le noyau plongeur mobile (8) suspendu élastiquement par un ressort (9) transmet des chocs, directement ou indirectement, à un outil (10). Une diode (11) branchée en parallèle avec le thyristor de décharge (5) permet le passage de l'intensité négative de la décharge des condensateurs (4).

Ce circuit est déjà décrit dan le brevet français n° 2 356 483 et sa première addition n° 2 425 302.

En se référant aussi aux figures précédentes, on notera que l'intensité notée (i) est celle traversant la partie du circuit électrique commune aux deux fonctions de charge et de décharge des condensateurs (4), et mesurable entre les points (G) et (H) par exemple.

Selon l'invention, pour la synchronisation des impulsions électriques avec le déplacement du noyau plongeur (8) dans le bobinage (6) de l'électro-aimant (7), on utilise dans l'exemple de la figure 6 un capteur d'intensité disposé dans le circuit de la diode (11), et réalisé par une résistance (12) de faible valeur qui ne perturbe pas le fonctionnement de l'ensemble. La tension recueillie aux bornes de la résistance (12) correspond à l'intensité (i) négative parcourant le bobinage (6) de l'électro-aimant (7), après la décharge des condensateurs (4) dans ce bobinage (6).

Cette tension est appliquée au primaire d'un transformateur (13) élévateur de tension, dont le secondaire fournit une tension variant dans le temps en fonction de l'intensité traversant la résistance (12), et dont les passages au zéro correspondent aux zéros de l'intensité du courant parcourant le bobinage (6).

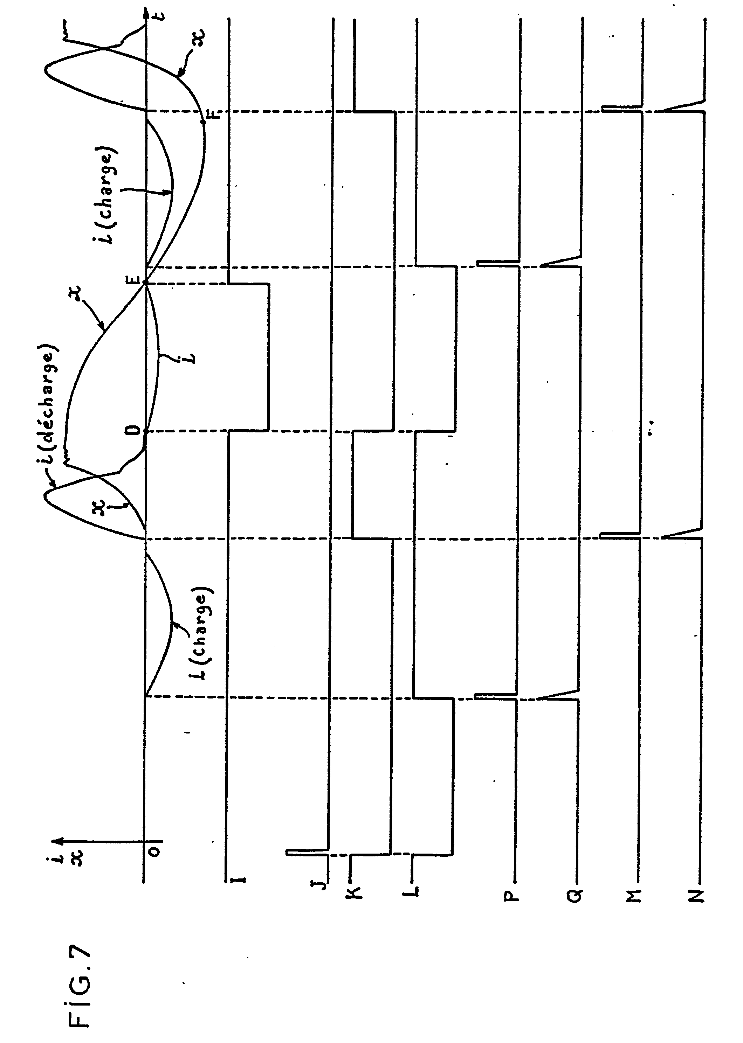

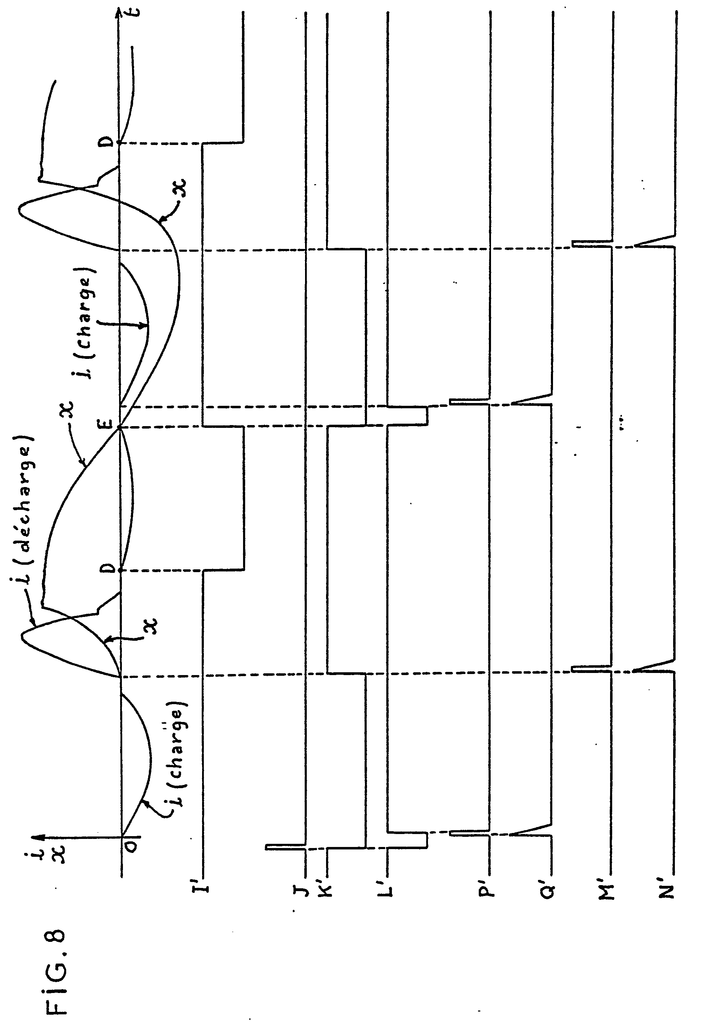

Un circuit logique approprié (14) réalise la détection des passages au zéro de la tension fournie par le secondaire du transformateur (13). Le circuit logique (14) délivre un signal de sortie rectangulaire (I) ou (I'), dont le début et la fin correspondent au passage au zéro de l'intensité négative (i) parcourant le bobinage (voir figures 7 et 8, en haut). Le signal de détection produit par ce circuit (14) peut être exploité soit en utilisant la détection du premier passage au zéro (point D), soit la détection du second passage au zéro (point E).

Dans le premier cas illustré par la figure 7, après mise en route de la commande par un oscillateur de démarrage (15) émettant une impulsion (J), le signal produit par le circuit (14) détectant le premier passage au zéro (point D) commande en parallèle :

— un circuit logique (16), produisant une impulsion (K) de durée au moins égale à la demi-période de l'oscillation du système oscillant mécanique ;

— un autre circuit logique (17), produisant une impulsion (L) dont la durée détermine l'instant de déclenchement de la charge des condensateurs (4).

La fin de l'impulsion (K) produite par le circuit (16) commande, par l'intermédiaire d'un circuit logique (18) qui fournit une impulsion (M), un circuit interface (19) de commande du thyristor de décharge (5), la ligne inférieure du diagramme de la figure 7 représentant les impulsions (N) délivrées par le circuit interface (19) du thyristor (5).

La fin de l'impulsion (L) produite par le circuit (17) commande, par l'intermédiaire d'un circuit logique (20) qui fournit une impulsion (P), un circuit interface (21) de commande du thyristor de charge (3), la ligne (Q) du diagramme de la figure 7 représentant les impulsions délivrées par le circuit interface (21) au thyristor (5). Un contact de commande impérative (22) est associée au circuit interface (21) et permet aux condensateurs de rester déchargés automatiquement pendant les temps de repos de l'appareil.

Dans le deuxième cas, illustré par la figure 8, c'est le signal produit par le circuit (14) détectant le second passage au zéro (point E) qui commande en parallèle ;
— le circuit logique (16), qui dans ce cas produit une impulsion (K') de durée au moins égale au quart de la période de l'oscillation du système oscillant mécanique ;
— le circuit logique (17), produisant une impulsion (L') dont la durée détermine l'instant de déclenchement de la charge des condensateurs.

Comme précédemment, la fin de l'impulsion (K') produite par le circuit (16) commande, par l'intermédiaire du circuit logique (18) fournissant une impulsion (M') le circuit interface (19) qui fournit des impulsions (N') au thyristor de décharge (5). La fin de l'impulsion (L') produite par le circuit (16) commande de même, par l'intermédiaire du circuit logique (20) fournissant une impulsion (P'), le circuit interface (21) qui fournit des impulsions (Q') au thyristor de charge (3).

Dans les deux cas, l'auto-synchronisation est réalisée, l'impulsion de commande (N) ou (N') du thyristor de décharge (5) étant piloté par le signal (I) ou (I') du circuit détecteur de zéro (14), et par le circuit logique (16) qui lui est associé et qui fournit une impulsion (K) ou (K') de durée déterminée par les caractéristiques du système oscillant mécanique.

Les durées des diverses impulsions sont réglables par des moyens appropriés, non représentés. Grâce aux réglages des durées des impulsions des circuits logiques, on peut obtenir les résultats suivants, s'ajoutant à l'auto-synchronisation :

Une variation de la fréquence de fonctionnement peut être obtenue en faisant en sorte que le circuit logique de synchronisation puisse être réglé à des valeurs de durée de l'impulsion tenant compte de la durée (T) de l'oscillation mécanique. Si par exemple pour la fréquence la plus rapide le réglage de la durée de l'impulsion est : Timp. = T/4, on obtiendra un réglage satisfaisant pour : Timp. = 5T/4 et pour Timp. = 9T/4.

L'amortissement de l'oscillation mécanique ne permet pas d'obtenir des réglages à l'infini.
— De même, dans le deuxième cas, une variation de la fréquence de fonctionnement sera obtenue de la même façon ; on aura par exemple satisfaction pour la fréquence la plus rapide, avec une durée de l'impulsion de synchronisation de : Timp. = T/2, et pour des fréquences plus basses avec : Timp. 3T/2 et Timp. = 5T/2.

Il est évident que les commandes réalisées avec des circuits logiques séparés, comme décrit ci-dessus et comme représenté au dessin pour distinguer clairement les différentes fonctions à assurer, peuvent l'être aussi avec ces mêmes circuits, intégrés sur un seul support, et également avec des dispositifs à microprocesseur avec mémorisation des fonctions.

**Revendications**

1. Procédé pour la commande auto-synchronisée du fonctionnement d'un marteau électro-magnétique, comprenant un électro-aimant (7) dont le bobinage (6) est apte à attirer un noyau plongeur (8) suspendu élastiquement (9), constituant une masse mobile déplaçable suivant l'axe du bobinage (6), avec, pour accumuler l'énergie électrique et la restituer brutalement dans le bobinage (6) de l'électro-aimant (7), des condensateurs (4) dont la charge au travers d'une inductance (2) est contrôlée par un premier thyristor (3) et dont la décharge, créant une impulsion de courant électrique de courte durée dans le bobinage (6) de l'électro-aimant (7), provoquant l'attraction du noyau plongeur (8) et le choc de l'outil de percussion (10), est contrôlée par un second thyristor (5), les électrodes de commande des thyristors de charge (3) et de décharge (5) étant reliées à des circuits de commande électroniques délivrant alternativement des impulsions sur chacune d'elles, caractérisé en ce que l'impulsion de commande (N, N') du thyristor de décharge (5) est déclenchée, soit après un temps au moins égal à la demi-période de l'oscillation mécanique de la masse mobile suspendue (8, 9) à partir de l'instant (D) où l'intensité du courant (i) de décharge des condensateurs (4), parcourant le bobinage (6) de l'électro-aimant (7), s'annule pour la première fois, soit après un temps au moins égal au quart de la période de l'oscillation mécanique de la masse mobile suspendue (8, 9) à partir de l'instant (E) où l'intensité du courant (i) de décharge du condensateur (4), parcourant le bobinage (6) de l'électro-aimant (7), s'annule pour la deuxième fois.

2. Procédé selon la revendication 1, caractérisé en ce qu'on détecte directement les passages (D, E) par la valeur zéro de l'intensité du courant (i) de décharge des condensateurs (4).

3. Procédé selon la revendication 1 ou 2, caractérisé en ce que l'impulsion de commande (Q, Q') du thyristor (3) de charge des condensateurs (4) est, elle aussi, déclenchée après un temps prédéterminé mesuré soit à partir de la détection du premier passage (D) par la valeur zéro de l'intensité (i), soit à partir de la détection du second passage (E) par la valeur zéro de l'intensité (i).

4. Dispositif destiné à la mise en œuvre du procédé selon l'une quelconque des revendications 1 à 3, caractérisé en ce qu'il comprend un circuit (16) produisant une impulsion (K, K') de durée égale à une fraction déterminée de la période de l'oscillation mécanique, un circuit (18) recevant ladite impulsion (K, K') et commandant, par l'intermédiaire d'un premier circuit interface (19), le thyristor (5) de décharge des condensateurs (4), un circuit (17) produisant une autre impulsion (L, L') de durée déterminée et un circuit (20) recevant cette autre impulsion (L, L') et commandant, par l'intermédiaire d'un second circuit interface (21), le thyristor (3) de charge des condensateurs (4) ; le circuit (16) produisant une impulsion (K, K') de durée égale à une fraction déterminée de la période de l'oscillation mécanique, pour la commande du thyristor de décharge (5), de même que le circuit (17) produisant une impulsion (L, L') de durée déterminée pour la commande du thyristor de charge (3), étant l'un et l'autre pilotés par un circuit détecteur de passage au zéro (14), relié à un capteur (12) de l'intensité du courant (i) de décharge des condensateurs (4).

5. Dispositif selon la revendication 4, caractérisé en ce que le capteur d'intensité est constitué par une résistance (12) disposée dans le circuit d'une diode (11) branchée, de façon connue en soi, en parallèle avec le thyristor de décharge (5), et reliée par l'intermédiaire d'un transformateur (13) élévateur de tension à l'entrée du circuit détecteur de passage au zéro (14).

6. Dispositif selon l'une des revendications 4 ou 5, caractérisé en ce qu'il comprend en outre un oscillateur de démarrage (15).

### Claims

1. A process for the self-synchronised control of the operation of an electromagnetic hammer having an electromagnet (7) the coil (6) of which is adapted to attract a plunger armature (8) with an elastic suspension (9), which constitutes a moving mass displaceable along the axis of the coil (6), together with means for the storage of electrical energy and its sudden release in the coil (6) of the electromagnet (7), comprising capacitors (4) charged controllably by a first thyristor (3) through an inductance (2) and discharged controllably by a second thyristor (5) to set up a brief electrical current pulse in the coil (6) of the electromagnet (7), thereby attracting the plunger armature (8) and impelling the percussion tool (10), the triggering electrodes of the charging thyristor (3) and the discharge thyristor (5) being connected to electronic command circuits which deliver pulses alternately to each, characterised in that the command pulse (N, N') for the discharge thyristor (5) is generated either after a period at least equal to half the mechanical oscillation period of the suspended moving mass (8, 9) following the instant (D) when the discharge current intensity (i) passing from the capacitors (4) through the coil (6) of the electromagnet (7) falls to zero for the first time, or after a period at least equal to a quarter of the mechanical oscillation period of the suspended moving mass (8, 9) following the instant (E) when the discharge current intensity (i) passing from the capacitor (4) through the coil (6) of the electromagnet (7) falls to zero for the second time.

2. A process as in Claim 1, characterised in that the instants (D, E) when the discharge current intensity (i) from the capacitors (4) passes through zero are detected by direct means.

3. A process as in Claim 1 or 2, characterised in that the command pulse (Q, Q') for the thyristor (3) to charge the capacitors (4) is likewise generated after a predetermined and measured period either from the detection of the first passage (D) of the intensity (i) through zero or from the detection of the second passage (E) of the intensity (i) through zero.

4. A device adapted to carrying out the process as in any of Claims 1 to 3, characterised in that it comprises a circuit (16) generating a pulse (K, K') equal in duration to a specified fraction of the mechanical oscillation period, a circuit (18) receiving the said pulse (K, K') and triggering the thyristor (5) which discharges the capacitors (4) through a first intermediate interface circuit (19), a circuit (17) generating another pulse (L, L') of specified duration, and a circuit (20) which receives this second pulse (L, L') and triggers the thyristor (3) which charges the capacitors (4) through a second intermediate interface circuit (21), both the circuit (16) generating a pulse (K, K') equal in duration to a specified fraction of the mechanical oscillation period to trigger the discharge thyristor (5), and the circuit (17) generating the other pulse (L, L') of specified duration to trigger the charging thyristor (3) being under the control of a zero passage detector circuit (14) which is connected to a sensor (12) monitoring the intensity of the discharge current (i) from the capacitors (4).

5. A device as in Claim 4, characterised in that the intensity sensor consists of a resistor (12) in the circuit of a diode (11) connected in parallel, in the known manner, with the discharge thyristor (5) and linked by means of a voltage step-up transformer (13) to the input of the zero passage detector circuit (14).

6. A device as in either of Claims 4 or 5, characterised in that it also incorporates a starting oscillator (15).

### Patentansprüche

1. Verfahren für die selbstsynchronisierte Steuerung eines elektromagnetischen Hammers, mit einem eine Wicklung (6) enthaltenden Elektromagneten (7) zum Anziehen eines elastisch (9) aufgehängten Tauchankers (8), der eine entlang der Achse der Wicklung (6) bewegbare Masse aufweist, mit zum Speichern und plötzlichen Abgeben von elektrischer Energie in die Wicklung (6) des Elektromagneten (7) dienenden Kondensatoren (4), deren Ladevorgang über eine Induktivität (2) durch einen ersten Thyristor (3) und deren Entladevorgang durch einen zweiten Thyristor (5) gesteuert wird, wobei ein kurzzeitiger elektrischer Stromstoß in der Wicklung (6) des Elektromagneten (7) erzeugt wird, der ein Anziehen des Tauchankers (8) und den Schlag des Schlagwerkzeugs (10) bewirkt und wobei die Steuerelektroden des Lade- (3) und Entladethyristors (5) mit abwechselnd Impulse an diese abgebenden, elektronischen Steuervorrichtungen verbunden sind, dadurch gekennzeichnet, daß der Steuerimpuls (N, N') des Entladethyristors (5) entweder nach einer wenigstens einer Halbschwingung der bewegbar aufgehängten Masse (8, 9) entsprechenden Zeitspanne ab dem Zeitpunkt (D) ausgelöst wird, in dem der die Wicklung (6) des Elektromagneten (7) durchfließende Entladestrom (i) der Kondensatoren (4) zum ersten Male abbricht, oder nach einer wenigstens einer Viertelschwingung der bewegbar aufgehängten Masse (8, 9) entsprechenden Zeitspanne ab dem Zeitpunkt (E), in dem der die Wicklung (6) des Elektromagneten (7) durchfließende Entladestrom (i) der Kondensatoren (4) zum zweiten Male abbricht.

2. Verfahren nach Anspruch 1, dadurch gekennzeichnet, daß man direkt die Null-Durchgänge (D, E) des Entladestroms (i) der Kondensatoren (4) erfaßt.

3. Verfahren nach Anspruch 1 oder 2, dadurch gekennzeichnet, daß der Steuerimpuls (Q, Q') des Thyristors (3) zum Laden der Kondensatoren (4) ebenfalls nach einer vorbestimmten Zeitspanne ausgelöst wird, und zwar entweder ab der Erfassung des ersten Null-Durchgangs (D) des Stroms (i) oder ab der Erfassung des zweiten Null-Durchgangs (E) des Stroms (i).

4. Vorrichtung zur Durchführung des Verfahrens nach einem der Ansprüche 1 bis 3, gekennzeichnet durch einen Schaltkreis (16), der einen der Dauer einer bestimmten Teilperiode der mechanischen Schwingung entsprechenden Impuls (K, K') erzeugt, einen diesen Impuls (K, K') übernehmenden Schaltkreis (18) der über einen ersten Zwischenschaltkreis (19) den Thyristor (5) zur Entladung der Kondensatoren (4) steuert, einen einen weiteren Impuls (L, L') vorbestimmter Dauer erzeugenden Schaltkreis (17) und einen diesen weiteren Impuls (L, L') übernehmenden Schaltkreis (20), der über einen zweiten Zwischenschaltkreis (21) den Thyristor (3) zur Ladung der Kondensatoren (4) steuert, wobei der Schaltkreis (16), der einen der Dauer einer bestimmten Teilperiode der mechanischen Schwingung entsprechenden Impuls (K, K') zur Steuerung des Entladethyristors (5) erzeugt, sowie der einen weitern Impuls (L, L') vorbestimmter Dauer zur Steuerung des Ladethyristors (3) erzeugende Schaltkreis (17) durch einen Schaltkreis (14) zur Erkennung des Null-Durchgangs gesteuert werden, der mit einem Sensor (12) für den Entladestrom (i) der Kondensatoren (4) verbunden ist.

5. Vorrichtung nach Anspruch 4, dadurch gekennzeichnet, daß der Sensor als Widerstand (12) im Stromkreis einer Diode (11) ausgebildet ist, die in ansich bekannter Weise mit dem Entladethyristor (5) parallel geschaltet und über einen Aufwärtstransformator (13) mit dem Eingang des Schaltkreises (14) zur Erkennung des Null-Durchgangs verbunden ist.

6. Vorrichtung nach Anspruch 4 oder 5, dadurch gekennzeichnet, daß zusätzlich ein Anlaufoszillator (15) vorgesehen ist.

0 101 389

FIG.1

FIG.2

FIG.3

FÌG.4

i (décharge)

Choc

x

i (induit par le mouvement de retour de la masse)

FÌG.5

i (décharge)

Choc

x

i (charge)

2

FIG.6

FIG.7

i(décharge)

i(charge)

0 101 389

FIG. 8